(19) Europäisches Patentamt
European Patent Office
Office européen des brevets

(11) Numéro de publication: **0 237 865**
**B1**

# (12) FASCICULE DE BREVET EUROPEEN

(45) Date de publication du fascicule du brevet: **04.04.90**

(51) Int. Cl.[4]: **B01D 71/00**, B01D 39/20

(21) Numéro de dépôt: **87103012.8**

(22) Date de dépôt: **05.09.84**

(60) Numéro de publication de la demande initiale en application de l'article 76 CBE: **0136937**

(54) **Procédé de fabrication d'un élément de microfiltration, d'ultrafiltration ou d'osmose inverse.**

(30) Priorité: **06.09.83 FR 8314212**
**23.11.83 FR 8318648**

(43) Date de publication de la demande:
**23.09.87 Bulletin 87/39**

(45) Mention de la délivrance du brevet:
**04.04.90 Bulletin 90/14**

(84) Etats contractants désignés:
**BE CH DE FR GB IT LI NL SE**

(56) Documents cités:
**EP-A- 0 040 282**
**FR-A- 2 150 390**
**FR-A- 2 179 984**
**US-A- 3 944 658**

**PATENT ABSTRACTS OF JAPAN, vol. 8, no. 156 (C-234)[1593], 19 juillet 1984; & JP-A-59 59 224 (MITSUBISHI JUKOGYO K.K.) 05-04-1984**

(73) Titulaire: **SOCIETE DES CERAMIQUES TECHNIQUES, 65460 Bazet(FR)**

(72) Inventeur: **Alary, Jean-André, 132, Le Fontenelle au Pré aux Clercs, Route de Mende F-34100 Montpellier(FR)**
Inventeur: **Cot, Louis, Résidence Les Pins Clapiers, F-34170 Castelnau Le Lez(FR)**
Inventeur: **Gugliermotte, Francis, Mas de la Tuillière Saint Jean de Cornies, F-34160 Castries(FR)**
Inventeur: **Larbot, André, 940, rue du Ravin d'Embarre§Saint Clement, F-34980 St Gely Du Fesc(FR)**
Inventeur: **Guizard, Christian, Rue des Remparts Puecharbon, F-34150 Gignac(FR)**

(74) Mandataire: **Weinmiller, Jürgen et al, Lennéstrasse 9 Postfach 24, D-8133 Feldafing(DE)**

**EP 0 237 865 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de fabrication d'un élément de microfiltration, d'ultrafiltration ou d'osmose inverse. Habituellement on effectue l'hydrolyse d'un alcoxyde, d'un composé organométallique, ou d'un sel métallique d'un acide minéral ou organique, de façon à obtenir un sol de de particules d'oxyde ou d'hydroxyde de l'élément chimique correspondant, on ajoute à ce sol un agent épaississant, et on effectue ensuite un engobage du sol obtenu sur une couche-support de pores plus gros que ceux désirés pour l'élément de filtration, puis on soumet la couche mince déposée sur la couche-support à un séchange, puis à un traitement thermique entraînant l'élimination de l'agent épaississant et le frittage des particules de la couche mince déposée.

On a proposé le document FR-A-2 150 390 un procédé de ce genre.

Il est cependant difficile d'obtenir un sol permettant la préparation d'une couche filtrante par dépôt sur un support macroporeux, et d'obtenir des dimensions de grains suffisamment fines pour se prêter aux applications en microfiltration, ultrafiltration et osmose inverse.

Il est aussi difficile d'effectuer le séchage et la cuisson d'une couche de gel déposée sur une couche-support sans l'apparition de fissu-rations et d'effrittement du gel.

La présente invention a pour but de procurer un procédé de fabrication d'un tel élément de microfiltration, ultrafiltration ou osmose inverse qui permette un dépôt facile par engobage sur une couche-support, qui évite au course du séchage et de la cuisson du gel, un grossissement des particules et l'apparition de fissures et d'un efritement du gel. Elle a encore pour but de permettre l'obtention d'éléments de microfiltration, ultrafiltration ou osmose inverse d'une grande finesse de pores de diamètres très voisins,d'une perméabilité élevée, d'une épaisseur faible et régulière, d'une bonne solidité mécanique, permettant notamment le décolmatage par contre-pression et l'utilisation de pressions de filtration élevées, d'une bonne résistance chimique et d'une bonne résistance aux attaques microbiennes ou par des enzymes.

La présente invention a pour objet un procédé de fabrication d'un élément de microfiltration, d'ultrafiltration ou d'osmose inverse, dans lequel on dépose par engobage, sur une couche-support ayant des pores plus gros que ceux désirés pour l'élément, une couche mince d'un mélange obtenu à partir d'un alcoxyde, d'un composé organo-métallique ou d'un sel métallique d'un acide minéral ou organique, additionné d'un agent épaississant, puis, après séchage de la couche mince déposé, l'on effectue un traitement thermique de ladite couche mince entraînement l'élimination de l'agent épaississant, puis le frittage des particules de cette couche. Ledit procédé, connu en soi du document FR-A 2 150 390 cité ci-dessous, se caractérise par le fait que ledit alcoxyde, ledit composé organo-métallique ou ledit sel métallique est tout d'abord dissous dans un solvant organique anhydre et que le séchage de ladite couche mince déposée par engobage, préalablement audit traitement thermique, est effectué en atmosphère suffisamment humide pour permettre l'hydrolyse de l'alcoxyde, du composé organo-métallique ou du sel métallique.

De préférence, l'agent épaississant est un polymère organique, tel qu'une résine acétal dans le cas d'une solution dans un alcool anhydre.

Le procédé selon l'invention permet en particulier d'obtenir des éléments de microfiltration, ultrafiltration ou osmose inverse dans lesquels les particules sont formées d'hydroxydes ou d'oxydes d'aluminium, de titane, de zirconium ou de silicium, ou de leurs mélanges.

Il est décrit ci-après, à titre d'exemple, un procédé de fabrication d'une membrane selon l'invention.

On part d'un alcoxyde tel que l'éthoxyde, le propoxyde ou l'isopropoxyde de titane, ou bien l'éthoxyde, le propoxyde ou l'isopropoxyde de zirconium, ou bien encore de tétrachlorure de titane ou de zirconium.

On le dissout dans un solvant organique anhydre tel que l'éthanol, le propanol, l'isopropanol ou un glycol.

On le mélange avec un gel constitué d'un polymère épaississant (par exemple une résine acétal telle que celles commercialisées sous les marques "Butvar" par la Société Shawinigan ou "Rhonival" par la Société Rhône-Poulenc), dissous dans le même solvant que l'alcoxyde.

On dépose un film de ce mélange sur la surface de céramique poreuse sur laquelle on veut former une membrane d'ultrafiltration par remplissage d'un tube poreux, puis vidage de ce tube après un contact d'une ou quelques minutes.

On sèche alors la membrane en atmosphère humide. Le départ du solvant permet à l'humidité de l'air de pénétrer dans la couche, ce qui provoque l'hydrolyse de l'alcoxyde, selon l'une des réactions :

$Ti(OC_2H_5)_4 + 4 H_2O \rightarrow Ti(OH)_4 + 4 C_2H_5OH$

$Zr(OC_3H_8)_4 + 4 H_2O \rightarrow Zr(OH)_4 + 4 C_3H_8OH$

$TiCl_4 + 2 H_2O \rightarrow TiO_2 + 4 HCl$

La présence de l'agent épaississant empêche le grossissement des cristaux d'hydroxyde formés lors de l'hydrolyse.

On effectue alors une cuisson ménagée jusqu'à une température de plusieurs centaines de degrés à 1000°C, de manière à assurer l'élimination par combustion du composé organique et la décomposition complète de l'hydroxyde en bioxyde de titane ou de zirconium. On arrête la cuisson quand le diamètre de pores désiré est atteint.

Les éléments d'ultrafiltration à base d'oxydes de titane ou de zirconium présentent sur ceux à base d'alumine gamma, l'avantage d'une meilleure résistance chimique.

## Revendications

1/ Procédé de fabrication d'un élément de microfiltration, d'ultrafiltration ou d'osmose inverse, dans lequel on dépose par engobage, sur une couche-support ayant des pores plus gros que ceux désirés pour l'élément, une couche mince d'un mélange obtenu à partir d'un alcoxyde, d'un composé organo-métallique ou d'un sel métallique d'un acide minéral ou organique, additionné d'un agent épaississant, puis, après séchage de la couche mince déposé, l'on effectue un traitement thermique de ladite couche mince entraînant l'élimination de l'agent épaississant, puis le frittage des particules de cette couche, caractérisé par le fait que ledit alcoxyde, ledit composé organo-métallique ou ledit sel métallique est tout d'abord dissous dans un solvant organique anhydre et que le séchage de ladite couche mince déposée par engobage, préalablement audit traitement thermique, est effectué en atmosphère suffisamment humide pour permettre l'hydrolyse de l'alcoxyde, du composé organo-métallique ou du sel métallique.

2/ Procédé selon la revendication 1, caractérisé en ce que l'agent épaississant est une résine acétal, et le solvant est un alcool anhydre.

3/ Procédé selon l'une des revendications 1 à 2, caractérisé en ce que l'élément chimique de l'oxyde ou de l'hydroxyde (produits par l'hydrolyse) des particules est l'aluminium, le titane, le zirconium ou le silicium, ou en ce que l'on part d'un mélange de composés de ces éléments.

**Patentansprüche**

1. Verfahren zur Herstellung eines Elements für ein Mikrofilter, ein Ultrafilter oder für die umgekehrte Osmose, bei dem auf einem Schichtträger mit Poren, die größer sind als die für das Element gewünschten Poren, durch Engobieren eine dünne Schicht einer Mischung aufgebracht wird, die aus einem Alkoxid, einer organo-metallischen Verbindung oder einem Metallsalz einer mineralischen oder organischen Säure unter Zugabe eines Verdickungsmittels gewonnen wird, wobei im Anschluß an das Trocknen der aufgebrachten dünnen Schicht eine Wärmebehandlung dieser Schicht erfolgt, durch die das Verdickungsmittel entfernt wird, worauf die Partikel dieser Schicht gesintert werden, dadurch gekennzeichnet, daß das Alkoxid, die organometallische Verbindung oder das Metallsalz zuerst in einem wasserfreien organischen Lösungsmittel gelöst wird und daß die Trocknung der vor der Wärmebehandlung durch Engobieren aufgebrachten dünnen Schicht in einer ausreichend feuchten Atmosphäre durchgeführt wird, um die Hydrolyse des Alkoxids, der organo-metallischen Verbindung oder des Metallsalzes zu ermöglichen.

2. Verfahren nach Anspruch 1, dadurch gekennzeichnet, daß das Verdickungsmittel ein Acetalharz und das Lösungsmittel ein wasserfreier Alkohol ist.

3. Verfahren nach Anspruch 1 oder 2, dadurch gekennzeichnet, daß das chemische Element des Oxids oder des Hydroxids (durch Hydrolyse erzeugt) der Partikel Aluminium, Titan, Zirkon oder Silizium ist oder daß von einer Mischung von Verbindungen dieser Elemente ausgegangen wird.

**Claims**

1. A method of manufacturing an element for microfiltration, ultrafiltration, or reverse osmosis, in which a thin layer of a mixture obtained from an alkoxide of an organo-metallic compound or of a metal salt of an organic or inorganic acid having a thickening agent added thereto is deposited by slip painting on a support layer having pores which are larger than the pores desired for the element, then, after the deposited thin layer has dried, said thin layer is subjected to heat treatment causing the thickening element to be eliminated, then causing the particles of said layer to sinter together, the said method being characterized by the facts that said alkoxide, said organo-metallic compound, or said metal salt is initially dissolved in an anhydrous organic solvent, and that said thin layer deposited by slip painting is dried prior to said heat treatment in an atmosphere which is sufficiently humid to ensure hydrolysis of the alkoxide, of the organo-metallic compound, or of the metal salt.

2. A method according to claim 1, characterized in that the thickening agent is an acetal acid, and the solvent is an anhydrous alcohol.

3. A method according to claim 1 or 2, characterized in that the chemical element of the oxide or of the hydroxide produced by the hydrolysis of the particles is aluminium, titanium, zirconium, or silicon, and in that the starting material is a mixture of compounds of these elements.